# EUROPEAN PATENT SPECIFICATION

(11) **EP 1 691 477 B1**
(45) Date of publication and mention of the grant of the patent: **01.04.2009**
(21) Application number: 05016207.2
(22) Date of filing: 26.07.2005
(51) Int. Cl.: H02P 7/00, G01G 19/56, D06F 37/00, D06F 39/00

(54) **Drum type washing machine and method of detecting laundry weight thereof**
Waschmaschine mit Waschtrommel und Verfahren zum Bestimmen des Wäschegewichtes
Machine à laver à tambour et procédé pour déterminer le poids du linge

(30) Priority: 14.02.2005 KR 2005011857
(43) Date of publication of application: 16.08.2006
(73) Proprietor: LG Electronics, Inc., Seoul 150-010 (KR)
(72) Inventor: Choi, Byung Keol, Inchun-si 403-777 (KR); Kim, Dong Won, Kwangmyung-si Kyungki-do 423-064 (KR); Lee, Dong Soo, Seoul 135-080 (KR)
(74) Representative: TER MEER - STEINMEISTER & PARTNER GbR

(56) References cited:
- EP-A- 0 410 827
- EP-A- 0 653 832
- US-A1- 2003 009 832

## Description

### BACKGROUND OF THE INVENTION

### Field of the Invention

The present invention relates to a drum type washing machine and a method of detecting laundry weight thereof, and, more particularly, to a drum type washing machine and a method of detecting laundry weight thereof that is capable of calculating a ratio of input voltage applied to a motor through phase control until the motor reaches a determined number of rotations to accurately detect the weight of laundry and/or the amount of eccentricity of the laundry received in a drum connected to the motor.

### Description of the Related Art

Generally, a drum type washing machine is a machine that performs a washing operation using the friction between a drum, in which detergent, washing water, and laundry is received, and the laundry when the drum is rotated by a driving force of a motor. When the laundry is washed in the drum type washing machine, the laundry is not tangled, and therefore, damage to the laundry is minimized.

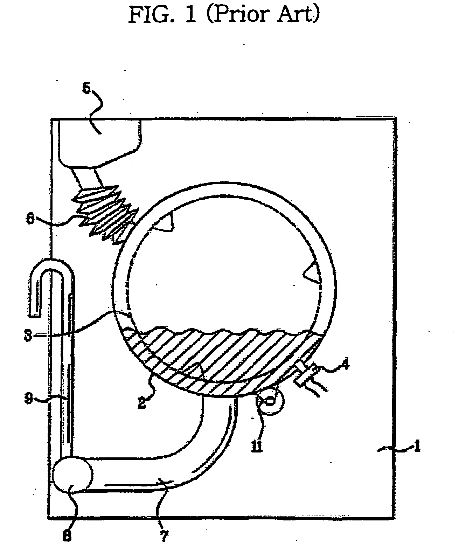

FIG. 1 is a sectional view illustrating the interior structure of a conventional drum type washing machine.

As shown in FIG. 1, the conventional drum type washing machine comprises: a tub 2 fixedly mounted in a cabinet 1; a drum 3 rotatably disposed in the tub for receiving laundry; a motor 10 connected to the drum 3 for rotating the drum 3; a water supply pipe 6 connected to a detergent box 5 for supplying pure washing water or washing water containing detergent to the tub 2; a drainage pipe 7 for discharging washing water used to wash the laundry out of the drum 3; and a drainage pump 8 and a drainage hose 9 connected to the end of the drainage pipe 7 for forcibly pumping out the washing water discharged through the drainage pipe 7 such that the washing water is drained out of the washing machine. The drainage pipe 7, the drainage pump 8, and the drainage hose 9 constitute a drainage unit.

The motor 10 comprises a stator (not shown) and a rotor (not shown). As the rotor is rotated, the drum 3 is rotated. The conventional drum type washing machine further comprises: a control unit (not shown) for controlling the operation of the motor 10.

In addition, the conventional drum type washing machine further comprises: a detecting unit (not shown) for detecting the number of rotations or the rotation angle of the motor 10. The detecting unit may be a hole sensor.

The operation of the conventional drum type washing machine with the above-stated construction will be described below.

When a user puts laundry into the drum 3, closes a door (not shown), and operates the drum type washing machine, the control unit detects weight of the laundry received in the drum 3, and sets washing water level, washing time, the amount of detergent, rinsing water current, and washing water current based on the detected laundry weight.

Washing water is supplied to the tub 2 through the water supply pipe 6 for a predetermined period of time based on the set washing water level. Consequently, the washing water is filled in the tub 2 to the sent washing water level.

The control unit controls the motor 10 to be driven at a predetermined number of rotations for a predetermined period of time such that the drum 3 is rotated by the motor 10. As a result, dirt is separated from the laundry received in the drum 3 through the operation of the washing water. After the laundry is washed as described above, i.e., after a washing operation is completed, the contaminated washing water in the tub 2, i.e., the washing water used to wash the laundry in the drum 3, is drained out of the drum type washing machine through the drainage unit.

Subsequently, a rinsing operation for rinsing out bubbles from the laundry is performed several times. At this time, the water supply unit and the motor 10 are controlled based on the laundry weight detected when the washing operation is performed. After the repeated rinsing operation is performed, a dewatering operation is performed to remove moisture from the rinsed laundry using centrifugal force. In this way, the operation of the drum type washing machine is completed.

In the conventional drum type washing machine with the above-stated construction and operation, the detection of the laundry weight is important to set the washing water level, the washing time, the rinsing water current, and the washing water current. For this reason, various laundry weight detecting methods have been proposed.

An example of the laundry weight detecting methods is to compare accelerating time of the drum 3 based on the current laundry weight with time necessary to accelerate the drum to predetermined speed to determine weight of the laundry received in the drum 3 using the principle that the accelerating time is increased when the laundry weight is high and the accelerating time is decreased when the laundry weight is low.

When the washing water is supplied into the drum 3, the laundry received in the drum 3 absorbs the washing water supplied into the drum 3, and therefore the initial washing water level is decreased, and therefore, washing water is further supplied into the drum 3 to compensate for the decreased washing water level. Another example of the laundry weight detecting methods is to detect the laundry weight by measuring how many times the washing water is further supplied into the drum 3.

With the proposed laundry weight detecting methods, however, the laundry weight detection is not accurately performed due to the difference in materials and characteristics of laundry.

In order to solve the above-mentioned problems, a laundry weight detecting method has been proposed that detects the magnitude of a phase angle when the motor 10 reaches predetermined number of rotations using a triac for controlling the operation of the motor 10, determines sections to which the detected phase angle belongs, and determines whether the laundry weight is high or low based on the determined sections, thereby detecting the laundry weight irrespective of materials of the laundry, which is disclosed in Korean Unexamined Patent Publication No. 1997-0075044.

With the above-mentioned method for detecting the phase angle to detect the laundry weight, however, it is merely determined whether the laundry weight is high or low. Consequently, subdivision of the laundry weight is difficult. Furthermore, a same-material load having a large amount of eccentricity, such as jeans or towels, is not considered, and therefore, the laundry weight is not accurately detected.

EP 0 410 827 describes a washing machine and a method of detecting the weight of the laundry by calculating the ratio of the input voltage of the motor and to determine the weight of the laundry based on a modified voltage value, when the motor is rotated at a constant speed.

### SUMMARY OF THE INVENTION

Therefore, the present invention has been made in view of the above problems, and it is an object of the present invention to provide a drum type washing machine and a method of detecting laundry weight thereof that is capable of calculating a ratio of input voltage applied to a motor through phase control until the motor reaches a determined number of rotations to accurately detect the weight of laundry received in a drum connected to the motor.

It is another object of the present invention to provide a drum type washing machine and a method of detecting laundry weight thereof that is capable of calculating ripples in the number of rotations of the motor, when the motor reaches the predetermined number of rotations, to accurately detect the weight of same-material laundry having a large amount of eccentricity based on the calculated ripples in the number of rotations of the motor and the rate of input voltage.

The objects are solved by the features of the independent claims 1 and 8.

The modified voltage value is a ratio of voltage applied to the motor through the phase control to one-cycle sinusoidal-wave input voltage.

According to the present invention, a ratio of input voltage applied to a motor is calculated to accurately detect the weight of laundry received in a drum in steps. Consequently, the present invention has the effect of reducing water consumption when a washing operation is performed and performing a uniform washing operation.

Furthermore, ripples in the number of rotations of the motor when the motor is rotated at constant speed are calculated to accurately detect the weight of same-material laundry having a large amount of eccentricity, such as jeans or towels. Consequently, the present invention has the effect of increasing accuracy in detection of eccentricity, which is required when a dewatering operation is performed, and therefore, greatly improving reliability of the drum type washing machine.

### BRIEF DESCRIPTION OF THE DRAWINGS

The above and other objects, features and other advantages of the present invention will be more clearly understood from the following detailed description taken in conjunction with the accompanying drawings, in which:
FIG. 1 is a sectional view illustrating the interior structure of a conventional drum type washing machine;
FIG. 2 is a block diagram illustrating the interior structure of a drum type washing machine according to the present invention;
FIGS. 3A and 3B are graphs illustrating examples of a modified voltage value calculating method for the drum type washing machine according to the present invention, respectively;
FIG. 4 is a graph illustrating the number of rotations of a motor based on phase control for the drum type washing machine according to the present invention;
FIG. 5 is a flow chart illustrating a method of detecting laundry weight for the drum type washing machine according to the present invention; and
FIG. 6 is a graph illustrating an example of laundry weight detection based on modified voltage values and ripples in the number of rotations for the drum type washing machine according to the present invention.

### DESCRIPTION OF THE PREFERRED EMBODIMENTS

Now, preferred embodiments of the present invention will be described in detail with reference to the accompanying drawings. The interior structure of a drum type washing machine according to the present invention is similar to that of the conventional drum type washing machine previously described with reference to FIG. 1, and a detailed description thereof will not be given.

Specifically, the drum type washing machine according to the present invention comprises: a cabinet forming the outer appearance of the drum type washing machine; a tub mounted in the cabinet for receiving washing water, the tub being supported by springs and dampers such that impact applied to the tub is absorbed by the springs and the dampers; a drum rotatably disposed in the tub for receiving laundry, the drum having a plurality of water holes formed at the outer circumferential surface thereof; a plurality of lifters attached to the inner side surface of the drum for lifting the laundry to a predetermined height, when the drum is rotated, such that the laundry drops from the predetermined height due to gravity; a motor M mounted at the rear of the tub for transmitting a rotating force to the drum; a door hingedly connected to the front surface of the cabinet for opening and closing a laundry inlet/outlet hole formed at the front surface of the cabinet; and a plurality of hole sensors mounted at one side of the motor for detecting the number of rotations and the rotating angle of the motor.

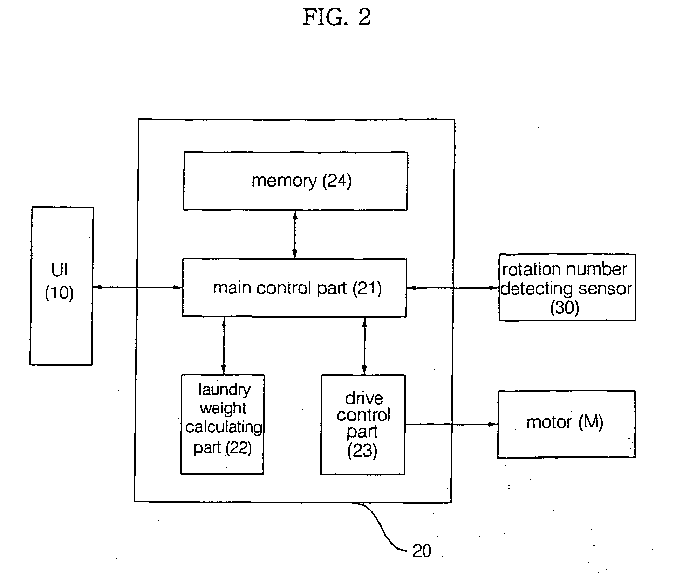

FIG. 2 is a block diagram illustrating the interior structure of a drum type washing machine according to the present invention.

As shown in FIG. 2, the drum type washing machine according to the present invention comprises: a user interface (UI) 10 for inputting a control command from the outside and outputting state data based on the input control command; and a control unit 20 for controlling the operation of the drum type washing machine based on the control command input from the user interface 10.

The drum type washing machine according to the present invention further comprises: a rotation number detecting sensor 30 for sensing the number of rotations of the motor M and transmitting the detected signal to the control unit 20.

The control unit 20 comprises: a laundry weight calculating part 22 for calculating a ratio of input voltage of the motor M to detect the weight of the laundry received in the drum type washing machine in steps; and a drive control part 23 for controlling the speed of the motor M.

The control unit 20 further comprises: a main control part 21 for receiving data from the user interface 10 and the rotation number detecting sensor 30, creating a control command based on the received data, and transmitting the created control command to the user interface 10 and the rotation number detecting sensor 30 to wholly control the operation of the respective components of the drum type washing machine; and a memory part 24 for storing a control program necessary to drive the main control part 21 and user-defined data input through the user interface 10.

The user interface 10 comprises: an input part (not shown) for inputting a control command; and an output part (not shown) for outputting the state information of the drum type washing machine. The user interface 10 may be a control panel mounted at the upper part of the cabinet.

The laundry weight calculating part 22 serves to determine the weight of the laundry received in the drum in steps. Specifically, the laundry weight calculating part 22 defines a modified voltage (MV) value of the input voltage applied to the motor M, and adds modified voltage values calculated at the respective phase control cycles to determine whether the laundry weight is high or low.

Here, the modified voltage value is a ratio of voltage applied to the motor, which may be changed at the respective phase control cycles, to one-cycle sinusoidal-wave input voltage.

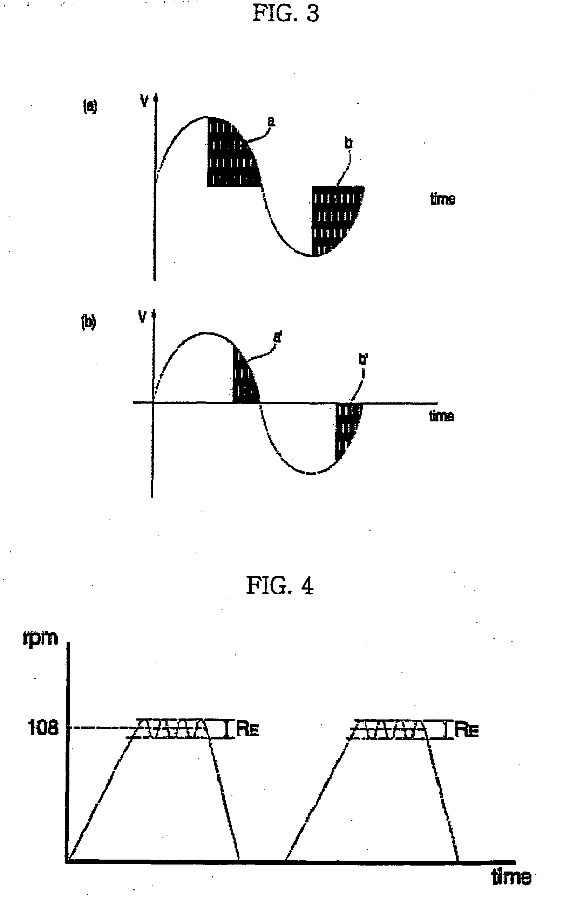

FIGS. 3A and 3B are graphs illustrating examples of a modified voltage value calculating method for the drum type washing machine according to the present invention, respectively.

The input voltage applied to the motor M is a sinusoidal-wave input voltage which is supplied to the drum type washing machine from the outside and the phase of which is controlled by a triac. Depending upon how the triac is operated, the voltage applied to the motor M is varied. The modified voltage value is a ratio of the varied amount of voltage.

When all the one-cycle sinusoidal-wave input voltage is applied to the motor M, for example, the motor is rotated at the maximum speed. At this time, the modified voltage value is assumed to be 100.

When the phase of the sinusoidal-wave input voltage is controlled, and therefore, the input voltage is applied to the motor M in the shape of a graph shown in FIG. 3A, sections a and b indicated in FIG. 3A correspond to half of the one-cycle input voltage. Consequently, the modified voltage value is 50.

When the input voltage is applied to the motor M in the shape of a graph shown in FIG. 3B, on the other hand, sections a' and b' indicated in FIG. 3B correspond to a quarter of the one-cycle input voltage. Consequently, the modified voltage value is 25.

As described above, the modified voltage value for one-cycle input voltage applied to the motor M is calculated using the above-described modified voltage value calculating method, and the modified voltage values calculated until the motor M is rotated at constant speed are added to detect the laundry weight.

The sum of the modified voltage values added by the laundry weight calculating part 22 to detect the laundry weight can be divided into predetermined steps in a range from the maximum value to the minimum value. Consequently, it is determined whether the laundry weight is high or low based on the steps to which the sum of the modified voltage values belongs.

For example, the sum of the modified voltage values may be divided into first to fourth steps based on the maximum value and the minimum value. When the sum of the modified voltage values belongs to the first step, it is determined that the weight of the laundry received in the drum is very small. When the sum of the modified voltage values belongs to the fourth step, on the other hand, it is determined that the weight of the laundry received in the drum is very high.

It should be noted that the steps divided based on the sum of the modified voltage values or the laundry weight detection at the respective steps may be variously set by manufacturers.

Even for a same-material load having a large amount of eccentricity, the laundry weight calculating part 22 can calculate the ripples in the number of rotations of the motor to accurately detect the laundry weight.

Specifically, when the motor M reaches the predetermined number of rotations, and are rotated at constant speed for a predetermine period of time, the number of rotations of the motor is not uniformly maintained depending upon the amount of eccentricity of the laundry received in the drum.

FIG. 4 is a graph illustrating the number of rotations of the motor based on the phase control for the drum type washing machine according to the present invention.

When the input voltage varied by the phase control is applied to the motor, the number of rotations of the motor is gradually increased according to the applied voltage. After the number of rotations of the motor reaches a predetermined number of rotations (for example, 108 rpm), the motor is rotated at constant speed for a predetermined period of time.

Therefore, it is expected that the motor is driven at the predetermined number of rotations while the motor is rotated at the constant speed. In practice, however, the number of rotations of the motor is slightly increased or decreased depending upon the amount of eccentricity of the laundry. When laundry having a large amount of eccentricity, such as jeans or towels, is received in the drum, the ripples R_{E} in the number of rotations of the motor are increased although the laundry is a same-material load and the laundry weight is small.

The ripples R_{E} in the number of rotations of the motor are varied based on the amount of eccentricity of the laundry received in the drum. Specifically, the ripples R_{E} in the number of rotations of the motor are increased as the amount of eccentricity of the laundry received in the drum is increased. This is true even when the number of rotations of the motor M is increased until the motor is rotated at constant speed. Although the laundry weight is small, therefore, the modified voltage values calculated until the motor is rotated at constant speed are relatively increased as compared to the modified voltage values for a small weight of general laundry.

Consequently, the laundry weight calculating part 22 detects the ripples R_{E} in the number of rotations of the motor while the motor is rotated at constant speed to add the ripples R_{E} in the number of rotations of the motor every phase control cycle. At this time, the calculated ripples can be converted into values through various methods. For example, when one ripple generated when the motor is rotated is assumed to be 1, the ripples R_{E} in the number of rotations of the motor are converted based on the number of ripples. According to the added ripples in the number of rotations of the motor, it is determined in steps whether the amount of eccentricity of the laundry is large or small.

As described above, the calculated modified voltage value is increased as the amount of eccentricity of the laundry is increased. Consequently, the laundry weight calculating part 22 may calculate the difference between the sum of the modified voltage values and the sum of the ripples in the number of rotations of the motor, and determine in steps whether the laundry weight is high or low based on the calculated difference.

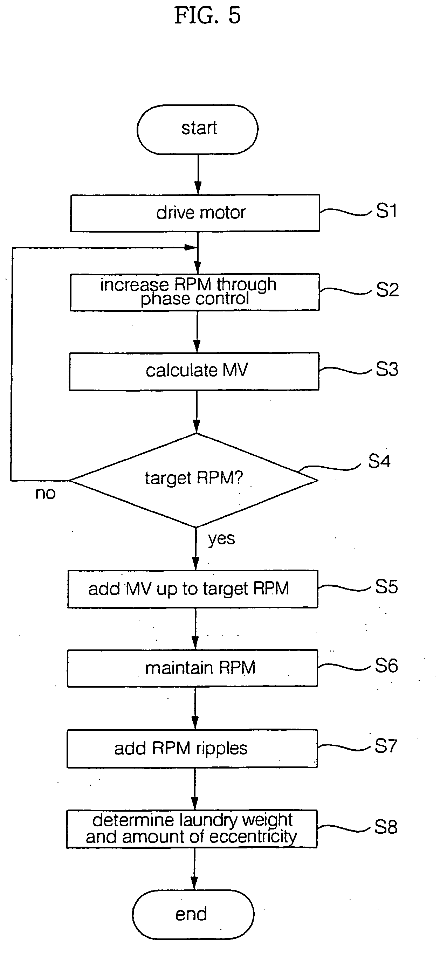

FIG. 5 is a flow chart illustrating a method of detecting laundry weight for the drum type washing machine according to the present invention.

First, laundry to be washed is put into the drum, and a washing operation execution command is input through the control panel.

According to the washing operation execution command input through the control panel, voltage is applied to the motor such that the motor is driven (S1).

Preferably, the motor is an induction motor having an additional speed reducer for controlling the rotating speed of the motor, although the present invention is not limited to the induction motor.

The input voltage applied to the motor is controlled through the phase control of the motor. Consequently, the rotating speed is varied, and therefore, the drum, in which the laundry is received, is rotated at predetermined speed (S2) .

The phase control is performed by a phase control circuit including a triac device for varying the speed of the motor when the sinusoidal-wave input voltage, i.e., a single phase electric source (for example, 220V/60Hz), is applied to the motor.

Consequently, the triac controls the applied sinusoidal-wave input voltage with a firing angle based on an additional input pulse signal to change the magnitude of the output voltage to a desired value such that the rotating speed of the motor can be varied.

As the firing angle is increased, the magnitude of the voltage is decreased, and therefore, the speed of the motor is decreased from high speed to low speed. As the firing angle is decreased, on the other hand, the magnitude of the voltage is increased, and therefore, the speed of the motor is increased from low speed to high speed. Consequently, the input voltage applied to the motor can be varied based on the phase control.

When sinusoidal-wave input voltage is applied to the motor through the above-described phase control, a modified voltage value, i.e., a ratio of voltage applied to the motor to one-cycle sinusoidal-wave input voltage, is calculated every phase control cycle (S3).

Subsequently, when the number of rotations of the motor reaches the predetermined number of rotations while the motor is driven, the voltage applied to the motor is controlled such that the motor is rotated at constant speed for a predetermined period of time (S4).

When the motor is continuously rotated at the constant speed, the modified voltage values calculated every cycle until the number of rotations of the motor reaches the predetermined number of rotations are added, and it is determined whether the laundry weight is high or low based on the sum of the modified voltage values (S5 and S6).

After the motor is rotated at the constant speed for the predetermined period of time, no input voltage is applied to the motor, and therefore, the motor is rotated by inertia, and is then stopped.

Consequently, the ripples in the number of rotations of the motor every cycle calculated when the motor is rotated at the constant speed until the motor is stopped are added, and the accurate amount of eccentricity of the laundry is determined based on the ripples in the number of rotations of the motor (S7 and S8).

Subsequently, the difference between the difference between the sum of the modified voltage values and the sum of the ripples in the number of rotations of the motor to determine the laundry weight within a predetermined range comprising at least one step (S8).

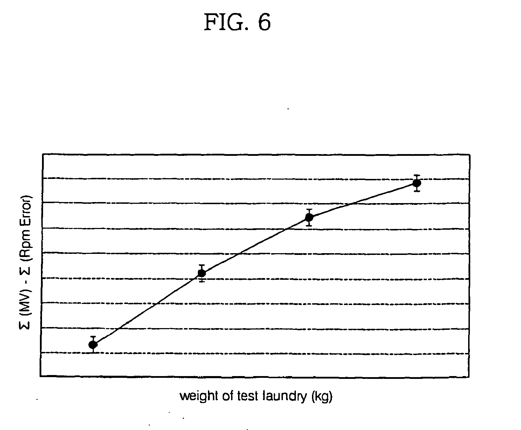

FIG. 6 is a graph illustrating an example of laundry weight detection based on modified voltage values and ripples in the number of rotations for the drum type washing machine according to the present invention.

As shown in FIG. 6, the weight of the test laundry used in an experiment is increased as the difference between the difference between the sum of the modified voltage values and the sum of the ripples in the number of rotations of the motor to determine the laundry weight is increased. Consequently, the laundry weight is accurately detected although the laundry is a same-material load having a large amount of eccentricity.

As apparent from the above description, the present invention provides a drum type washing machine and a method of detecting laundry weight thereof that is capable of calculating a ratio of input voltage applied to a motor to accurately detect the weight of laundry received in a drum in steps. Consequently, the present invention has the effect of reducing water consumption when a washing operation is performed and performing a uniform washing operation.

Furthermore, the present invention provides a drum type washing machine and a method of detecting laundry weight thereof that is capable of calculating ripples in the number of rotations of the motor, when the motor is rotated at constant speed, to accurately detect the weight of same-material laundry having a large amount of eccentricity, such as jeans or towels. Consequently, the present invention has the effect of increasing accuracy in detection of eccentricity, which is required when a dewatering operation is performed, and therefore, greatly improving reliability of the drum type washing machine.

Although the preferred embodiments of the present invention have been disclosed for illustrative purposes, those skilled in the art will appreciate that various modifications, additions and substitutions are possible, without departing from the scope of the invention as disclosed in the accompanying claims.

## Claims

1. A method of detecting laundry weight of a drum type washing machine, comprising the steps of:
a first step of applying phase-controlled input voltage to a motor (S1):
a second step of calculating a ratio of voltage applied to the motor to one-cycle input voltage, i.e. a modified voltage (MV) value, every control cycle, and determining whether the number of rotations of the motor reaches a predetermined number of rotations (S2 to S4):
a third step of adding the modified voltage values calculated at the second step, when the number of rotations of the motor reaches the predetermined number of rotations, to determine the weight of laundry (S5 to S8), wherein the third step comprises:
calculating ripples in the number of rotations of the motor while the motor is rotated at the constant speed at the predetermined number of rotations: and
determining the weight of the laundry based on the sum of the modified voltage values calculated in the third step and the ripples calculated in the fourth step.

2. The method as set forth in claim 1, wherein the third step comprises:
a modified voltage value adding step of adding the modified voltage values calculated every control cycle until the number of rotations of the motor reaches the predetermined number of rotations (S5); and
laundry weight detecting step of determining whether the laundry weight is high or low in steps based on the sum of the modified voltage values (S8).

3. The method as set forth in claim 2, wherein the laundry weight detecting step determines the laundry weight in four steps based on the sum of the modified voltage values.

4. The method as set forth in claim 1, wherein the third step further comprises:
a ripple calculating step of calculating ripples in the number of rotations of the motor while the motor is rotated at the constant speed at the predetermined number of rotations; and
a ripple adding step of adding the calculated ripples in the number of rotations of the motor (S7).

5. The method as set forth in claim 4. wherein, after the ripple adding step is performed, the laundry weight detecting step (S8) calculates the difference between the sum of the modified voltage values and the sum of the ripples in the number of rotations of the motor to determine whether the laundry weight is high or low.

6. The method as set forth in claim 1, wherein the fourth step comprises:
determining the amount of eccentricity of the laundry based on the ripples in the number of rotations of the motor (S8).

7. The method as set forth in claim 1, wherein the modified voltage (MV) value is a ratio of voltage applied to the motor through the phase control to one-cycle sinusoidal-wave input voltage.

8. A drum type washing machine comprising:
a motor (M) for rotating a drum; and
a control unit (20) for controlling the number of rotations of the motor (M) depending upon a washing operation and calculating a ratio of input voltage applied to the motor (M), i.e., a modified voltage (MV) value, to determine the weight of laundry received in the drum, said the control unit (20) comprises:
a drive control part (23) adapted to control the phase of the input voltage applied to the motor (M) to control the driven speed of the motor (M): and
a laundry weight calculating part (22) adapted to calculate the modified voltage value every phase control cycle of the drive control part (23) and to add the respective modified voltage value calculated until the number of rotations of the motor reaches a predetermined number of rotations to determine the laundry weight in steps,
**characterized in that**
the laundry weight calculating part (22) is adapetd to calculate ripples (RE) in the number of rotations of the motor (M) when the number of rotations of the motor (M) reaches the predetermined number of rotations, and to detect the weight of the laundry based on the sum of the modified voltage values and the calculated ripples in the number of rotations of the motor (M).

9. The machine as set forth in claim 8, further comprising: a rotation number detecting sensor (30) for sensing the number of rotations of the motor (M).

10. The machine as set forth in claim 8, wherein the laundry weight calculating part (22) is adapted to determine the amount of eccentricity of the laundry in steps based on the size of the calculated ripples (RE) in the number of rotations of the motor (M).

11. The machine as set forth in claim 8, wherein the modified voltage (MV) value is a ratio of voltage applied to the motor through the phase control to one-cycle sinusoidal-wave input voltage.

## Patentansprüche

1. Verfahren zum Erfassen des Wäschegewichts einer Trommelwaschmaschine, das die folgenden Schritte umfasst:
einen ersten Schritt des Anlegens einer phasengesteuerten Eingangsspannung an einen Motor (S1);
einen zweiten Schritt des Berechnens eines Verhältnisses der an den Motor angelegten Spannung zu einer Einzelzyklus-Eingangsspannung, d. h. einem modifizierten Spannungswert (MV-Wert), in jedem Steuerzyklus und des Bestimmens, ob die Motordrehzahl eine vorgegebene Drehzahl erreicht (S2-S4);
einen dritten Schritt des Addierens der modifizierten Spannungswerte, die in dem zweiten Schritt berechnet werden, wenn die Motordrehzahl die vorgegebene Drehzahl erreicht, um das Wäschegewicht zu bestimmen (S5 bis S8), wobei der dritte Schritt umfasst:
Berechnen von Welligkeiten der Motordrehzahl, während sich der Motor mit konstanter Geschwindigkeit mit der vorgegebenen Drehzahl dreht; und
Bestimmen des Gewichts der Wäsche anhand der Summe aus den modifizierten Spannungswerten, die im dritten Schritt berechnet werden, und der im vierten Schritt berechneten Welligkeiten.

2. Verfahren nach Anspruch 1, wobei der dritte Schritt umfasst:
einen Schritt des Addierens der modifizierten Spannungswerte, bei dem die modifizierten Spannungswerte, die in jedem Steuerzyklus berechnet werden, addiert werden, bis die Motordrehzahl die vorgegebene Drehzahl erreicht (S5); und
einen Schritt des Erfassens des Wäschegewichts, bei dem anhand der Summe der modifizierten Spannungswerte (S8) stufenweise bestimmt wird, ob das Wäschegewicht hoch oder niedrig ist.

3. Verfahren nach Anspruch 2, wobei der Wäschegewicht-Erfassungsschritt das Wäschegewicht in vier Stufen anhand der Summe der modifizierten Spannungswerte bestimmt.

4. Verfahren nach Anspruch 1, wobei der dritte Schritt ferner umfasst:
einen Welligkeitsberechnungsschritt, bei dem Welligkeiten der Motordrehzahl, während sich der Motor mit konstanter Geschwindigkeit bei der vorgegebenen Drehzahl dreht, berechnet werden; und
einen Welligkeitsadditionsschritt, bei dem die berechneten Welligkeiten der Motordrehzahl addiert werden (S7).

5. Verfahren nach Anspruch 4, wobei nach der Ausführung des Welligkeitsberechnungsschrittes in dem Wäschegewicht-Erfassungsschritt (S8) die Differenz zwischen der Summe der modifizierten Spannungswerte und der Summe der Welligkeiten der Motordrehzahl berechnet wird, um zu bestimmen, ob das Wäschegewicht hoch oder niedrig ist.

6. Verfahren nach Anspruch 1, wobei der vierte Schritt umfasst:
Bestimmen des Exzentrizitätsbetrags der Wäsche anhand der Welligkeiten der Motordrehzahl (S8).

7. Verfahren nach Anspruch 1, wobei der modifizierte Spannungswert (MV-Wert) ein Verhältnis der an den Motor während der Phasensteuerung angelegten Spannung zu einer Einzelzyklus-Sinuswellen-Eingangsspannung ist.

8. Trommelwaschmaschine, die umfasst:
einen Motor (M), um eine Trommel zu drehen; und
eine Steuereinheit (20), um die Motordrehzahl (M) in Abhängigkeit von einem Waschvorgang zu steuern und um ein Verhältnis der an den Motor (M) angelegten Eingangsspannung, d. h. eines modifizierten Spannungswertes (MV-Wertes), zu berechnen, um das Gewicht der in der Trommel aufgenommenen Wäsche zu bestimmen, wobei die Steuereinheit (20) umfasst:
einen Antriebssteuerabschnitt (23), der dazu ausgelegt ist, die Phase der an den Motor (M) angelegten Eingangsspannung zu steuern, um die Antriebs-Motordrehzahl (M) zu steuern; und
einen Wäschegewicht-Berechnungsabschnitt (22), der dazu ausgelegt ist, den modifizierten Spannungswert in jedem Phasensteuerzyklus des Antriebssteuerabschnitts (23) zu berechnen und den jeweils berechneten modifizierten Spannungswert zu addieren, bis die Motordrehzahl eine vorgegebene Drehzahl erreicht, um das Wäschegewicht schrittweise zu bestimmen,
**dadurch gekennzeichnet, dass**
der Wäschegewicht-Berechnungsabschnitt (22) dazu ausgelegt ist, Welligkeiten (RE) der Motordrehzahl (M) zu berechnen, wenn die Motordrehzahl (M) die vorgegebene Drehzahl erreicht, und das Gewicht der Wäsche anhand der Summe der modifizierten Spannungswerte und der berechneten Welligkeiten der Motordrehzahl (M) zu erfassen.

9. Maschine nach Anspruch 8, die ferner umfasst: einen Drehzahlerfassungssensor (30), um die Motordrehzahl (M) zu erfassen.

10. Maschine nach Anspruch 8, wobei der Wäschegewicht-Berechnungsabschnitt (22) dazu ausgelegt ist, den Exzentrizitätsbetrag der Wäsche anhand der Größe der berechneten Welligkeiten (RE) der Motordrehzahl (M) stufenweise zu bestimmen.

11. Maschine nach Anspruch 8, wobei der modifizierte Spannungswert (MV-Wert) ein Verhältnis der an den Motor während der Phasensteuerung angelegten Spannung zu einer Einzelzyklus-Sinuswellen-Eingangsspannung ist.

## Revendications

1. Procédé pour détecter le poids du linge dans une machine à laver du type à tambour, comprenant les étapes consistant à :
une première étape consistant à appliquer un voltage d'entrée contrôlé en phase à un moteur (S1);
une seconde étape consistant à calculer un rapport de voltage appliqué au moteur sur un voltage d'entrée sur un cycle, c'est-à-dire une valeur de voltage modifié (MV), à chaque cycle de commande, et à déterminer si le nombre de rotations du moteur atteint un nombre de rotations prédéterminé (S2 à S4) ;
dans lequel la troisième étape comprend les opérations consistant à :
calculer des ondulations dans le nombre de rotations du moteur alors que le moteur tourne à vitesse constante au nombre de rotations prédéterminé ; et
déterminer le poids du linge en se basant sur la somme des valeurs de voltage modifiées calculées dans la troisième étape et des ondulations calculées dans la quatrième étape.

2. Procédé selon la revendication 1, dans lequel la troisième étape comprend :
une étape d'addition de valeurs de voltage modifiées consistant à ajouter les valeurs de voltage modifiées calculées à chaque cycle de contrôle jusqu'à ce que le nombre de rotations du moteur atteigne le nombre de rotations prédéterminé (S5) ; et
une étape de détection du poids de linge consistant à déterminer si le poids du linge est élevé ou faible dans des étapes basées sur la somme des valeurs de voltage modifiées (S8).

3. Procédé selon la revendication 2, dans lequel l'étape de détection du poids de linge détermine le poids du linge en quatre opérations basées sur la somme des valeurs de voltage modifiées.

4. Procédé selon la revendication 1, dans lequel la troisième étape comprend encore :
une étape de calcul d'ondulations consistant à calculer des ondulations dans le nombre de rotations du moteur alors que le moteur est en rotation à la vitesse constante au nombre de rotations prédéterminé ; et
une étape d'addition d'ondulations consistant à ajouter les ondulations calculées dans le nombre de rotations du moteur (S7).

5. Procédé selon la revendication 4, dans lequel, après avoir exécuté l'étape d'addition d'ondulations, l'étape de détection du poids de linge (S8) calcule la différence entre la somme des valeurs de voltage modifiées et la somme des ondulations dans le nombre de rotations du moteur pour déterminer si le poids du linge est élevé ou faible.

6. Procédé selon la revendication 1, dans lequel la quatrième étape comprend de déterminer la quantité d'excentricité du linge en se basant sur les ondulations dans le nombre de rotations du moteur (S8).

7. Procédé selon la revendication 1, dans lequel la valeur de voltage modifiée (MV) est un rapport du voltage appliqué au moteur via le contrôle de phase sur un voltage d'entrée à onde sinusoïdale sur un cycle.

8. Machine à laver du type à tambour, comprenant :
un moteur (M) pour faire tourner un tambour ; et
une unité de commande (20) pour commander le nombre de rotations du moteur (M) en fonction d'une opération de lavage et pour calculer un rapport de voltage d'entrée appliqué au moteur (M), c'est-à-dire une valeur de voltage modifiée (MV), pour déterminer le poids du linge reçu dans le tambour, ladite unité de commande (20) comprenant :
une partie de commande d'entraînement (23) adaptée à commander la phase du voltage d'entrée appliqué au moteur (M) pour commander la vitesse d'entraînement du moteur (M) ; et
une partie de calcul de poids de linge (22) adaptée à calculer la valeur de voltage modifiée à chaque cycle de commande de phase de la partie de commande d'entraînement (23) et à ajouter la valeur de voltage modifiée respective calculée jusqu'à ce que le nombre de rotations du moteur atteigne un nombre de rotations prédéterminé, pour déterminer le poids de linge par étapes,
**caractérisée en ce que** le
la partie de calcul de poids de linge (22) est adaptée à calculer des ondulations (RE) dans le nombre de rotations du moteur (M) quand le nombre de rotations du moteur (M) atteint le nombre de rotations prédéterminé, et à détecter le poids du linge en se basant sur la somme des valeurs de voltage modifiées et les ondulations calculées dans le nombre de rotations du moteur (M).

9. Machine selon la revendication 8, comprenant en outre : un capteur de détection de nombre de rotations (30) pour détecter le nombre de rotations du moteur (M).

10. Machine selon la revendication 8, dans laquelle la partie de calcul de poids de linge (22) est adaptée à déterminer la quantité d'excentricité du linge dans des étapes basées sur la taille des ondulations calculées (RE) dans le nombre de rotations du moteur (M).

11. Machine selon la revendication 8, dans laquelle la valeur de voltage modifiée (MV) est un rapport du voltage appliqué au moteur via le contrôle de phase sur le voltage d'entrée à onde sinusoïdale sur un cycle.
